(19)

**Europäisches Patentamt**
**European Patent Office**
**Office européen des brevets**

(11) **EP 4 782 816 A1**

(12) **EUROPEAN PATENT APPLICATION**

(43) Date of publication:
**29.07.2026 Bulletin 2026/31**

(21) Application number: **26153278.2**

(22) Date of filing: **21.01.2026**

(51) International Patent Classification (IPC):
**G01N 21/03** (2006.01)    **G01N 21/31** (2006.01)

(52) Cooperative Patent Classification (CPC):
**G01N 21/31; G01N 21/031;** G01N 2201/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.01.2025 IT 202500001101**

(71) Applicants:
• **Istituto Nazionale di Fisica Nucleare**
  **00044 Frascati (RM) (IT)**
• **Università degli Studi di Catania**
  **95131 Catania (IT)**

(72) Inventors:
• **PERSIANI, Rino**
  **00044 FRASCATI (IT)**
• **ALBERGO, Sebastiano Francesco**
  **95131 Catania (CT) (IT)**
• **MILLESOLI, Samuele**
  **95131 Catania (CT) (IT)**
• **SACCÀ, Gaspare**
  **00044 Frascati (RM) (IT)**
• **TRICOMI, Alessia**
  **95131 Catania (CT) (IT)**

(74) Representative: **Metroconsult Srl**
  **Foro Bonaparte 51**
  **20121 Milano (IT)**

(54) **DEVICE FOR SPECTROSCOPIC ANALYSIS IN THE ULTRAVIOLET AND VISIBLE RANGE, AND METHOD OF USE OF SAID DEVICE**

(57)     Described herein is a device for spectroscopic analysis in the UV-Vis range, comprising:
- a UV-Vis pulsed light source (L) with pulses of less than or equal to 100 ps;
- an input device (F-in) adapted to receive the light from said source;
- a sample holder adapted to receive the light from said input device (F-in), said sample holder comprising:
- a first input duct (Ci) adapted to receive the light from said input device;
- a cavity (Psi, Pii) adapted to contain a solvent and a solution comprising a solvent and an analyte, said cavity being so formed within the sample holder as to receive the light from said input duct (Ci) and cause the light to be reflected multiple times inside the cavity, as well as to extend the optical path of the light in the sample holder;
- an output duct (Co) for outputting the light from said cavity and from said sample holder, said output duct being offset relative to said input duct (Ci);
- a second input duct (F) adapted for supplying solutions into said cavity;

- an output device (F-out) connected to said output duct (Co);
- an analysis device (S, A, D, O) adapted to receive the pulsed light from said output device (F-out), said analysis device being adapted to detect events of said spectroscopic analysis from a single photon of said pulsed light.

**FIG. 1**

## Description

<u>Field of the invention</u>

The present invention relates to a device for spectroscopic analysis in the ultraviolet and visible range, as well as to a method of use of said device.

<u>Background art</u>

Spectroscopic analysis is a very broad field, wherein the composition and the optical properties of the materials (in any phase, whether solid, liquid or gaseous) are determined through interaction between electromagnetic radiation and the material's components.

When the electromagnetic radiation in use is within the ultraviolet and visible range, reference is made to UV-Vis spectroscopy.

In spectroscopy, one of the most important measurements is absorbance. Every substance has a characteristic absorbance spectrum, through which it can be identified. The Lambert-Beer relationship states that absorbance is proportional to the length of the path followed by the light in the solution and to the concentration of the analyte in the solution.

This relationship is linear only within a certain range of values, and deviates with greater or smaller absorbance values, thus limiting the analyte's detection threshold.

This limitation is especially manifest with solutions having very low concentrations, particularly when gases are involved.

UV-Vis spectroscopy is based on the analysis of the absorbance of light by a substance, so that the latter can be quantitatively characterized and identified. More specifically, this technique involves sending electromagnetic radiation (in this case, UV and optical photons) of known intensity and measuring the residual intensity after the light beam has crossed the sample within a cuvette. Cuvettes are made of different materials, depending on the wavelength of the transmitted radiation: for the UV-Vis range the material employed is quartz, in order to reduce the absorbance of radiation by the cuvette itself, whereas for the infrared range they may be made of glass. The cuvettes define the optical path for all photons that cross them, and their length is on the order of one cm. The absorbance of a sample is measured as the logarithm of transmittance, i.e. the logarithm of the ratio between the intensity of the incident light and the intensity of the transmitted light, i.e. the light not absorbed by the sample.

The structure of a spectrophotometer includes:

- a light source covering the spectrum of interest. Usually, it is a Xenon or Deuterium-Tungsten lamp;
- a sample holder, e.g. a cuvette;
- a monochromator (two for fluorescence measurements) to separate the light emitted by the light source into different wavelengths. The monochromator may be constructed by using a quartz prism or a diffraction grating;
- a detector for measuring the intensity of the transmitted light. It may be a photomultiplier (PMT), a photodiode array (PDA), or a charge-coupled device (CCD).

Spectrophotometers can be classified according to the geometry of the optical system employed to detect the spectrum: scanning spectrophotometer and array spectrophotometer. In the former case, the monochromator is located between the source and the cuvette, so as to illuminate the sample with monochromatic light, whereas in the latter case light consisting of a continuous wavelength spectrum is transmitted, and the transmitted light is diffracted by a grating and sent to an array in order to determine the intensity of the light transmitted at each wavelength.

Spectrophotometers are also classified according to the beam configuration, which may be either single or dual. In the former case, the light beam is sent directly towards the cuvette, and two measurements are taken: one with solvent only (blank spectrum), and then one with the solution. In the dual-beam case, the light is divided into a reference beam and a sample beam, and measurements can be taken either simultaneously or alternately using an optical chopper.

These known spectrophotometers have a certain range, which is quite narrow, of concentration values within which the Lambert-Beer relationship is linear, so that the concentration of a substance in solution can be deduced on the basis of the measured absorbance value.

For highly concentrated solutions, particular methods have been adopted wherein a drop of solution is squeezed on a platform in order to reduce to a known length the path of the light within the solution to be analyzed.

In order to measure highly concentrated samples, a technique called "slope spectroscopy" has been introduced, as described in patent application US2021405076A1. In this case, a series of absorbance measurements are taken at different lengths of the photon path within the sample. The different lengths of the optical paths are obtained by physically moving the fiber that transports the light in the sample. By representing the absorbance values on a graph as a function of the length of the optical path, a regression line can be generated, such that its slope is proportional to the concentration of the solution.

With highly diluted or poorly concentrated solutions, or, in particular, gases, transmittance is high and, consequently, absorbance is very low.

The need is therefore felt for improvements in the features and performance of devices designed for spectroscopic analysis in the UV-Vis range, especially in order to increase the sensitivity of the UV-Vis spectrophotometer and lower the minimum concentration of detection.

Summary of the invention

It is therefore an object of the present invention to propose a device for spectroscopic analysis in the ultraviolet and visible range, as well as a method of use of said device, designed to overcome all of the above-mentioned drawbacks, particularly by increasing the sensitivity of the UV-Vis spectrophotometer and lowering the minimum concentration of detection.

The present invention uses a UV-Vis light source with a very short pulse (less than or equal to approx. 100 ps). The light is sent to a sample holder, preferably made of Teflon (PTFE), through solarized optical fibers.

In a preferred embodiment, the sample holder has a spherical cavity formed therein. For example, the sample holder has a cylindrical outer shape, but different outer shapes are possible as well.

The sample holder is made of reflective material to reflect the light within the inner cavity multiple times, thus extending the optical path of the light inside such cavity.

Shapes other than spherical are also possible, e.g. cylindrical. In general, the shape of the inner cavity is such that the optical path inside the sample holder can be extended.

The light is introduced into the sample holder through an input duct, and then let out through an output duct, which is offset relative to the input duct.

The output light is sent to a SiPM silicon photomultiplier having single-photon sensitivity. Such sensitivity allows detecting single-photon events.

The method of the invention requires the use of said device.

For each photon going through the sample holder, it is possible to measure with high accuracy (at present, approx. 100 ps) the time taken by the photon to cross it, so that the length of its path in the sample holder can be inferred with an uncertainty that depends on the time measurement accuracy and on the length of the light pulse.

Uncertainties of centimeters may easily result when estimating optical paths of meters.

The measurement is first taken with solvent only, and then with the solution including the same solvent and the analyte under examination.

By drawing on a graph the ratio between the two time distributions for each bin (time interval) and by computing a linear regression, a straight line is obtained whose slope is proportional to the concentration of the analyte.

The advantages provided by the present invention are therefore apparent.

Compared with prior-art methods, it allows measuring optical paths on the order of meters by using samples with a size on the order of centimeters.

By using the sample holder of the device according to the invention, it is possible to extend the optical path thanks to its highly reflective walls.

Knowing the photon start and detection times, and working on a single-photon basis, it is possible to reconstruct the length of the path followed within the sample, and then use the slope spectroscopy technique to extract the sample concentration, once the device has been calibrated.

Furthermore, with the device and method of the present invention the size and mass of the sample can remain small, because the extension of the optical path is obtained as a consequence of repeated reflections on the walls of the sample holder. This advantage is of the utmost importance when only a limited quantity of material is available, as is the case when performing unrepeatable tests in which samples are used which cannot be reproduced at will.

It is one object of the present invention to provide a device for spectroscopic analysis in the ultraviolet and visible range, as set out in claim 1.

Dependent claims 2 - 9 describe some preferred variants of said device.

It is another object of the present invention to provide a method of use of said device, as set out in claim 10.

Dependent claims 11 - 12 describe some preferred variants of said method.

All claims are intended as integral parts of the present description.

Brief description of the drawings

Further objects and advantages of the present invention will become apparent in light of the following detailed description of an exemplary embodiment (and variants thereof) referring to the annexed drawings, which are merely supplied by way of non-limiting example, and wherein:

Figure 1 shows an exemplary block diagram of the device according to the invention;

Figure 2 shows an exploded perspective view of the sample holder according to the invention;

Figure 3 shows a collapsed perspective view corresponding to Figure 2.

Figure 4 shows a sectional side view of the sample holder;

Figure 5 shows a quarter sectional view of the whole sample holder.

In the drawings, the same reference numerals and letters identify the same items or components.

Detailed description of exemplary embodiments

The instrument is made up of several components. The following will describe in detail an exemplary embodiment with reference to the accompanying drawings.

Unlike the instruments currently available on the market, UV-Vis light is produced by a pulsed light source producing a very short light pulse (shorter than or equal to approx. 100 ps), with the possibility of adjusting the intensity.

This makes it possible to adjust the number of photons exiting the sample holder, so as to always maintain a single-photon approach.

The light is conveyed through the various parts of the instrument by means of multi-mode solarized optical fibers.

If the source is a monochromatic one, the light will be sent directly into the sample holder; otherwise, particularly if the source emits a continuous spectrum, the light can be preliminarily sent to a monochromator to select a very narrow window of wavelength values.

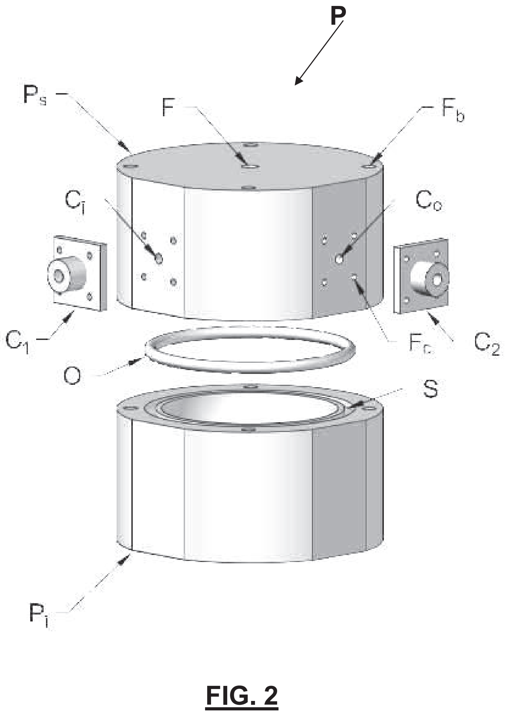

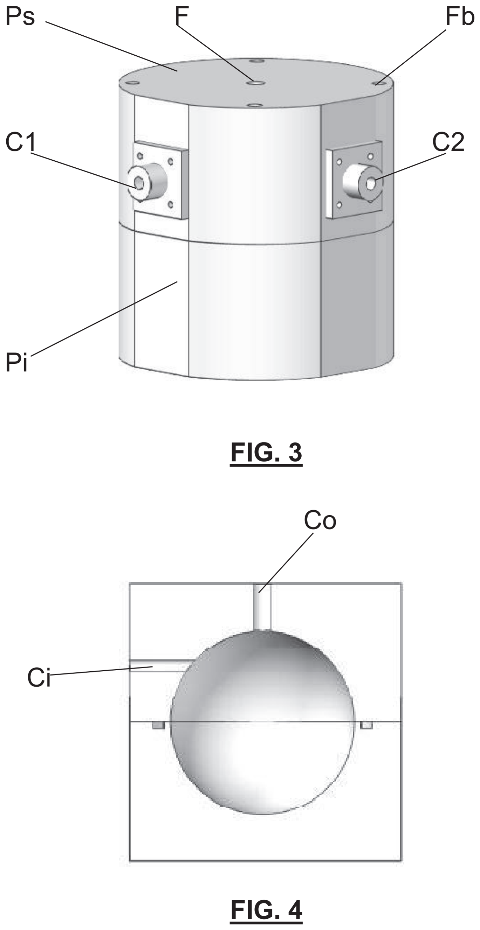

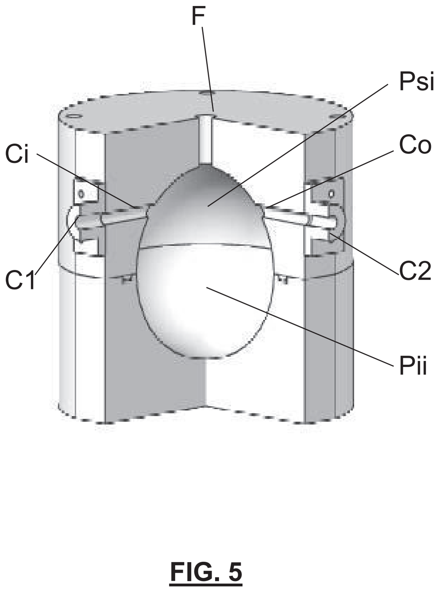

The sample holder represents an essential element of the present invention, and is shown in Figures 2, 3, 4 and 5. Figure 2 shows an exploded perspective view, while Figure 3 show a corresponding assembled view. Figure 4 shows a sectional top view, and Figure 5 shows a quarter sectional view of the whole sample holder.

The sample holder was built by using a numerical control lathe, starting from a PTFE cylinder cut into two halves (Ps and Pi) to obtain two internal hemispheres Psi and Pii (Figure 5). In the upper cylinder (Ps) three through holes were drilled, which connect the outer surface of the cylinder with the internal hemisphere Psi: two of such holes (Ci, Co) are orthogonal to the cylinder axis, and are used as ducts to introduce light into the cavity (Ci) or to take the photons out of the cavity (Co), while the third hole F runs vertically along the axis of rotation of the cylinder, is threaded, and can be closed by means of a threaded plug made of the same material as that of the sample holder. This hole is used for introducing solutions into the cavity. At a position corresponding to the two ducts Ci and Co, two fiber-optic panel connectors C1 and C2 are arranged on the outer part of the cylinder. The connectors may be of the FC-PC type. The connectors are attached to the sample holder by means of 4 screws each, inserted in seats designated as Fc. An O-ring (O) ensures tightness of the sample holder, and is positioned in a seat S formed in the lower half Pi of the sample holder. The two half-cylinders are joined by means of 4 fastening bolts and nuts, housed in holes Fb and running through the entire sample holder.

The material of the sample holder may be PTFE, but other materials with high reflective properties in the UV-Vis range may also be employed, such as: Spectralon®, melted silica, etc.

The radius of the spherical cavity affects the maximum length that the photons can travel within it, as well as the average length of the path followed by the photons between two successive reflections. This travelled distance is directly proportional to the time taken by the photons to exit the cavity, and can therefore affect the precision of the measurement. In particular, the value of the radius of the spherical cavity should be selected also as a function of the absorbance of the analyte, giving preference to smaller dimensions for higher absorbance values. For example, a spherical cavity with a radius of 2 cm (as shown in the drawings) will permit to obtain path lengths on the order of meters in water. For gaseous fluids, the size of the spherical cavity can be increased to radii of tens of centimeters.

The use of this particular sample holder offers several advantages, including:

- strength;
- compactness;
- extended optical path;
- possibility of obtaining multiple optical paths in one object;
- operation is not affected by solution turbidity;
- operation is not affected by solution stratification (floatation or sedimentation).

The solution to be analyzed is introduced into the sphere by means of, for example, a syringe or a pipette. Alternative solutions are also possible, such as two ducts controlled by pneumatic valves for supplying and draining the solution.

Pulsed light is introduced into the sample holder through the duct Ci and is reflected inside by the highly reflective walls. Part of the light will be absorbed by the solution and by the analyte, and another part, which can be easily assessed, will be lost by diffusive reflection on the PTFE walls of the sphere.

Only a few photons will reach the duct Co and the output fiber. Their number can be adjusted as a function of the intensity of the source.

At this point, the light is conducted to a photosensor, which may be, for example, of the SiPM type.

This type of photosensor, which is different from those used in prior-art devices, has very good photon counting properties, in that it has single-photon sensitivity. Moreover, it offers a very fast time response (duration of a few nanoseconds and resolution of a hundred picoseconds).

The electrical signal outputted by the SiPM photosensor is then amplified and sent to a constant-fraction discriminator.

The time distance between this signal and the trigger signal of the light source is measured with a resolution of fractions of a nanosecond. This time delay is due to the time taken by the photons to flow along the optical fibers, and also depends on the optical path followed inside the sample holder.

The first contribution is the same for all photons, whereas the second contribution is variable according to the travelled space.

Since the sphere and the ducts of the sample holder are completely filled with the same solution, the speed of the photons is constant. Therefore, the time taken by the photons to cross the sphere is directly proportional to the optical path.

Absorbance can be obtained by computing the natural logarithm of the ratio between the number of counts falling within the same time interval of the time distributions obtained in the case in which the sample consists of the matrix or solvent only and in the case in which the sample consists of a solution of solvent and analyte.

After drawing this ratio on a graph as a function of the optical path followed by the photon (i.e. the crossing time), it will be possible to apply the slope spectroscopy technique and then compute a linear regression.

The angular coefficient of the straight line thus obtained will be proportional to the concentration of the analyte in the solution.

With reference to the annexed drawings, the following will describe some non-limiting examples of implementation of the device and of the method of use of the same.

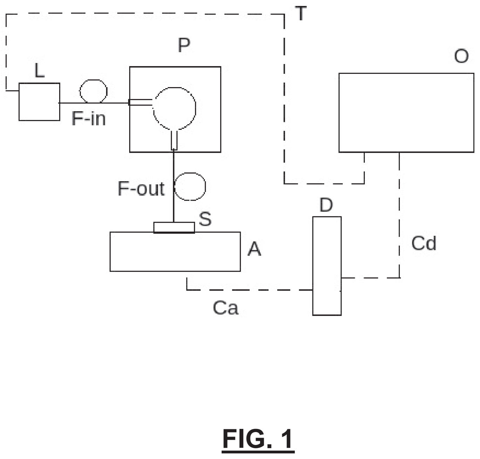

Figure 1 shows a block diagram of a non-limiting example of implementation of the device according to the invention.

It comprises a monochromatic light source (L) producing very short pulses of light having a wavelength in the UV-Vis range. For example, a 405nm laser with a pulse width of 71 ps may be used.

Together with the light pulse, the laser generates a trigger TTL (or, optionally, NIM) signal T, which is sent to an oscilloscope (O), e.g. by means of an RG48 cable with BNC connectors.

Through a fiber (F-in) - e.g. a multi-mode solarized fiber, so as to obtain good transmittance in the UV region - the light pulse is introduced into the sample holder (P).

The light then goes through the duct Ci formed in the sample holder and enters the reflective inner cavity.

The cavity is preferably spherical. but, as aforesaid, other shapes may also be used, e.g. cylindrical, and give the same performance.

The light arriving at the output duct Co is collected by a fiber (F-out), of the same type as the preceding fiber F-in, and is then sent to a SiPM sensor (S).

The sensor in use may be a Hamamatsu MPPC S13360-1350CS sensor with an active area of 1.3x1.3 $mm^2$.

The SiPM sensor is mounted on a power supply unit, e.g. a CAEN SP5600E power supply unit (A in Fig. 1 ), which, in addition to supplying power to the sensor, also amplifies the output signal. The input voltage of the SiPM sensor is 55 V, and the amplification provides a gain of 40 dB.

The amplified signal is then sent to an input signal level discriminator (D).

The discriminator D should preferably be a constant-fraction discriminator (CFD), e.g. an Ortec 934, because, unlike traditional threshold-based discriminators, which generate an output signal when the input signal exceeds a certain voltage threshold, provides an output when the signal reaches a specific fraction of its maximum value. This ensures very good time precision even in the presence of signals with different amplitudes.

The signal outputted by the CFD is then supplied to the oscilloscope (O), e.g. by means of an LEMO cable (Cd). The oscilloscope may be, for example, a LeCroy SDA 760Zi-A oscilloscope, which can provide sampling up to 40 GS/s.

The time taken by the photons to cross the cavity is then calculated by measuring the time distance between the trigger TTL signal (T) and the logic signal generated by the CFD (D).

By repeating this measurement for many single-photon events, it is possible to build a time-delay distribution, which will have an exponential trend due to the nature of the optical-physical processes involved.

In order to be able to adopt a single-photon approach, it is important to use a light source whose intensity can be selected by the operator. However, even when working on single-photon events, there will still be some negligible contamination from events caused by two photons or, more seldom, by more than two photons. In this case, the CFD will assist in eliminating such events, since it will be possible to select the width of the output logic signal. In our tests, the width of the logic signal was set to 100 ns.

According to another possible configuration, a digitizer may be used instead of a CFD and an oscilloscope. In such a case, the waveform of the amplified signal Ca outputted by the module A will only be saved when the trigger signal of the source arrives at the digitizer.

All waveforms will be saved regardless of the number of photoelectrons contained therein, which will be kept small anyway.

Subsequently, a program of a per se known type will be able to analyze the waveforms by machine learning and recognize the number of photons and the time of arrival.

The following will describe the method of use of the device. The measurement procedure applies to both of the above-described configurations.

1) The cavity and the ducts of the sample holder are filled with solvent only, preferably milliQ® ultrapure water.

2) The time delay of the exiting photons is measured in relation to the above-mentioned trigger signal. The number of counts within each time interval of this distribution represents the number of photons that took the same time to cross the cavity, i.e. that followed the same path. The width of the bin of this histogram, multiplied by the speed of the light through the medium, thus represents the uncertainty about the path followed by the photons exiting the cavity. For example, if the bin is 20ps wide, then the spatial resolution of the distances travelled by the photons inside the sphere or cylinder will be approx. 5 mm; if the bin is 100ps wide, then the spatial resolution will be 2.3 cm; if the bin is 200ps wide, then the resolution will be 4.5 cm.

In this case, the absorbance $A_w$ of the water or solvent can be described by the following formula for each interval of distance travelled by the light:

$$A_w = \ln\left(\frac{I_0}{I_w}\right)$$

where $I_0$ is the intensity of the light transmitted when the cavity is empty (this datum is determined a priori), and $I_w$ is the intensity of the light transmitted when the cavity is filled with water only.

3) The cavity of the sample holder is emptied, and the solution is then introduced, which contains the analyte whose concentration is to be determined. The measurement of the time delays between the photosensor's signal and the trigger signal is then repeated.

In this case as well, the absorbance $A_s$ can be calculated with the following formula:

$$A_s = \ln\left(\frac{I_0}{I_s}\right)$$

By calculating $I_0$ from the previous expression, the following is obtained:

$$A_s = \ln\left(\frac{I_w}{I_s}\right) + A_w$$

Since the light intensity is proportional to the number of photons, the above expression can be rewritten as:

$$A_s = \ln\left(\frac{N_w}{N_s}\right) + A_w$$

where $N_s$ and $N_w$ represent the number of photons that followed the same path, i.e. the counts of each bin of the time distribution.

This implies that the technique is not affected by variations in the source's intensity.

It is also possible to obtain the absorbance $A_s$ minus a constant value, i.e. the absorbance of the solvent $A_w$, which is constant in all bins of the histogram.

According to the Lambert-Beer law, the absorbance $A_s$ is proportional to the length of the path followed by the photons 1 and to the concentration of the analyte in the solution c. The proportionality coefficient is also called molar extinction coefficient $\varepsilon$. The complete relation is:

$$A_s = \varepsilon l c$$

By combining these two relations, the following is obtained:

$$A_s = \ln\left(\frac{N_w}{N_s}\right) + A_w = \varepsilon l c$$

This relation is important, because it can be inferred that, when creating a graph with the length of the path followed by the photons in the solution (which is proportional to the cavity crossing time) on X-axis and the natural logarithm of the ratio between the number of photons observed in the solvent and the number of photons observed in the solution for each group of trace lengths (i.e. the natural logarithm of the ratio of each bin of the time distributions acquired in the above steps 2 and 3) on the Y-axis, the points will arrange themselves along a straight line whose angular coefficient will be proportional to the concentration of the analyte, which will thus be measured.

The following will briefly describe the form of the photons' cavity crossing times and the dependency on the material's reflectivity:

In particular, the time constant $\tau$ of exponential decay is described by the following formula:

$$\tau = \frac{1}{-\ln(\rho) + \alpha d}\left(\frac{d}{v} + \delta t\right)$$

where $\rho$ is the reflectivity of the material of the sample holder, $\alpha$ is the sample's absorption coefficient, d is the mean distance travelled by the photon between two reflections, v is the speed of the light in the sample, and $\delta t$ is a contribution due to the fact that the photons may not be reflected immediately from the surface of the cavity, but may scatter through a small thickness before re-entering the cavity.

The above-described example of embodiment may be subject to variations without departing from the protection scope of the present invention, including all equivalent designs known to a person skilled in the art.

The elements and features shown in the various preferred embodiments may be combined together without however departing from the protection scope of the present invention.

In light of the above description, those skilled in the art will be able to produce the subject of the invention without introducing any further construction details.

**Claims**

1. Device for spectroscopic analysis in the UV-Vis range, comprising:

   - a UV-Vis pulsed light source (L) with pulses of less than or equal to 100 ps;
   - an input device (F-in) adapted to receive the light from said source;
   - a sample holder adapted to receive the light from said input device (F-in), said sample holder comprising:

     - a first input duct (Ci) adapted to receive the light from said input device;
     - a cavity (Psi, Pii) adapted to contain a solvent and a solution comprising a solvent and an analyte, said cavity being so formed within the sample holder as to receive the light from said input duct (Ci) and cause the light to be reflected multiple times inside the cavity, as well as to extend the optical path of the light in the sample holder;
     - an output duct (Co) for outputting the light from said cavity and from said sample holder, said output duct being offset relative to said input duct (Ci);
     - a second input duct (F) adapted for supplying solutions into said cavity;

   - an output device (F-out) connected to said output duct (Co);
   - an analysis device (S, A, D, O) adapted to receive the pulsed light from said output device (F-out), said analysis device being adapted to detect events of said spectroscopic analysis from a single photon of said pulsed light, and to obtain said spectroscopic analysis in the UV-Vis range.

2. Device for spectroscopic analysis in the UV-Vis range as in claim 1, wherein said cavity (Psi, Pii) has a spherical or cylindrical shape.

3. Device for spectroscopic analysis in the UV-Vis range as in claim 1 or 2, wherein:

   - said input device (F-in) comprises one or more solarized input optical fibers adapted to receive and convey the light from said source;
   - said output device (F-out) comprises one or more output optical fibers from said output duct (Co).

4. Device for spectroscopic analysis in the UV-Vis range as in one of the preceding claims, wherein:

   - said sample holder is divided into two parts (Ps, Pi), each part comprising one half of said cavity (Psi and Pii), the two parts of the cavity mating with each other;
   - said first input duct (Ci), said second input duct (F) and said output duct (Co) are formed in one of said two parts of the sample holder, said ducts being adapted to connect the outer surface of the sample holder to the corresponding half of the cavity.

5. Device for spectroscopic analysis in the UV-Vis range as in one of the preceding claims, wherein said analysis device (S, A, D, O) comprises:

   - a photosensor (S) adapted to count the photons of said pulsed light received from said output device (F-out);
   - a power supply unit (A) adapted to supply power to the photosensor and amplify the signal received therefrom;
   - a discriminator (D) adapted to receive the signal from the amplifier and output a level-discriminated signal;
   - a meter (O) adapted to receive the signal from said discriminator (D) and a trigger signal (T) generated by said pulsed source (L), said meter being adapted to analyze the time taken by the photons of the received signal to cross said cavity, measuring the time distance between said trigger signal (T) and the signal received from the discriminator (D), and to repeat the measurement for many single-photon events, thereby obtaining said spectroscopic analysis.

6. Device for spectroscopic analysis in the UV-Vis range as in one of the preceding claims, wherein said sample holder is made of Teflon (PTFE), or Spectralon®, or melted silica.

7. Device for spectroscopic analysis in the UV-Vis range as in one of the preceding claims, wherein said photosensor (S) is of the SiPM type.

8. Device for spectroscopic analysis in the UV-Vis range as in one of the preceding claims, wherein said discriminator (D) is of the constant-fraction type.

9. Device for spectroscopic analysis in the UV-Vis range as in one of the preceding claims, wherein said meter (O) is an oscilloscope or a digitizer.

10. Method of use of the device for spectroscopic analysis in the UV-Vis range as in any one of the preceding claims, comprising the following steps:

    - (a) filling said cavity (Psi, Pii) and said ducts of the sample holder with a solvent only, introducing it through said second input duct (F);

- (b) generating light by means of said source (L);
- (c) introducing said light into said cavity through said input device (F-in) and said first input duct (Ci);
- (d) through said analysis device (S, A, D, O), measuring the time delay of the photons exiting the sample holder through said output duct (Co) relative to a trigger signal (T) generated by said source (L), the number of photon counts within the interval of said time delay representing the number of photons that took the same time to cross said cavity, i.e. that followed the same path;
- (e) draining said solvent from said cavity;
- (f) introducing a solution of said solvent and an analyte into said cavity (Psi, Pii);
- (g) repeating the measurement of the time delay between the photosensor signal and the trigger signal by executing the operations of steps (b) to (d), thereby obtaining said spectroscopic analysis in the UV-Vis range of said analyte.

11. Method as in claim 10, wherein said spectroscopic analysis in the UV-Vis range of said analyte is performed by representing on a graph the ratio between the results of the operations of steps (d) and (g) and by computing a linear regression to obtain a straight line whose slope is proportional to the concentration of said analyte, thereby obtaining said spectroscopic analysis.

12. Method as in claim 11, wherein said analysis device (S, A, D, O) performs the following operations:

- calculation of the absorbance $A_w$ of said solvent in said interval:

$$A_w = \ln\left(\frac{I_0}{I_w}\right)$$

where $I_0$ is the intensity of the light transmitted when the cavity is empty (this datum is determined a priori), and $I_w$ is the intensity of the light transmitted when the cavity is filled with said solvent;
- calculation of the absorbance $A_s$ of said solution in said interval:

$$A_s = \ln\left(\frac{I_0}{I_s}\right)$$

where $I_s$ is the intensity of the light transmitted when the cavity is filled with said solution;
- then calculation of:

$$A_s = \ln\left(\frac{I_w}{I_s}\right) + A_w$$

- and then calculation of:

$$A_s = \ln\left(\frac{N_w}{N_s}\right) + A_w$$

where the light intensity is proportional to the number of photons, $N_s$ and $N_w$ represent the number of photons that followed the same path, i.e. the counts of each time interval of the time distribution.
- then calculation of:

$$A_s = \varepsilon l c$$

where the absorbance $A_s$ is proportional to the length of the path followed by the photons 1 and to the concentration of the analyte in the solution c, via a proportionality coefficient or molar extinction coefficient $\varepsilon$;
- then calculation of:

$$A_s = \ln\left(\frac{N_w}{N_s}\right) + A_w = \varepsilon l c$$

- drawing said straight line with said absorbance values $A_s$, the slope of which is proportional to the concentration of said analyte, thereby obtaining said spectroscopic analysis.

**FIG. 1**

**FIG. 2**

**FIG. 3**

**FIG. 4**

**FIG. 5**

Europäisches
Patentamt

European
Patent Office

Office européen
des brevets

## EUROPEAN SEARCH REPORT

**Application Number**

EP 26 15 3278

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CONE MICHAEL T. ET AL: "Diffuse reflecting material for integrating cavity spectroscopy, including ring-down spectroscopy", APPLIED OPTICS, vol. 54, no. 2, 9 January 2015 (2015-01-09), page 334, XP093293753, US ISSN: 1559-128X, DOI: 10.1364/AO.54.000334 * sections 2.B. and 5.A.; figures 9-12, 15, 17 * * page 339, right-hand column * * page 344, right-hand column * * page 341, left-hand column, line 19 * ----- | 1-12 | INV. G01N21/03 G01N21/31 |
| Y | JONATHAN E THOMPSON ET AL: "A fixed frequency aerosol albedometer References and linksCavity ring-down and cavity-enhanced detection techniques for the measurement of aerosol", OPTIC EXPRESS, vol. 16, no. 3, 4 February 2008 (2008-02-04), pages 2191-2205, XP055329848, DOI: 10.1364/OE.16.002191 * figure 1 * ----- -/-- | 1-12 | TECHNICAL FIELDS SEARCHED (IPC) G01N |

The present search report has been drawn up for all claims

| Place of search | Date of completion of the search | Examiner |
|---|---|---|
| Munich | 17 April 2026 | Meacher, David |

page 1 of 4

Europäisches
Patentamt

European
Patent Office

Office européen
des brevets

# EUROPEAN SEARCH REPORT

**Application Number**

EP 26 15 3278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VAN DER SNEPPEN ET AL: "Cavity ring-down spectroscopy for detection in liquid chromatography at UV wavelengths using standard cuvettes in a normal incidence geometry", JOURNAL OF CHROMATOGRAPHY A, ELSEVIER, AMSTERDAM, NL, vol. 1148, no. 2, 10 April 2007 (2007-04-10), pages 184-188, XP022025359, ISSN: 0021-9673, DOI: 10.1016/J.CHROMA.2007.03.028 * page 186, left-hand column, lines 1-4 * ----- | 1-12 | |
| Y | JAVORFI ET AL: "Quantitative spectrophotometry using integrating cavities", JOURNAL OF PHOTOCHEMISTRY AND PHOTOBIOLOGY B: BIOLOGY, ELSEVIER SCIENCE S.A., BASEL, CH, vol. 82, no. 2, 1 February 2006 (2006-02-01), pages 127-131, XP005248574, ISSN: 1011-1344, DOI: 10.1016/J.JPHOTOBIOL.2005.10.002 * section 4. * ----- | 11,12 | |

TECHNICAL FIELDS
SEARCHED        (IPC)

-/--

The present search report has been drawn up for all claims

| Place of search | Date of completion of the search | Examiner |
|---|---|---|
| Munich | 17 April 2026 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 26 15 3278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EDWARD S FRY ET AL: "Integrating cavity ring-down spectroscopy (ICRDS) and the direct measurement of absorption coefficients", PHYSICA SCRIPTA, INSTITUTE OF PHYSICS PUBLISHING, BRISTOL, GB, vol. 91, no. 4, 7 March 2016 (2016-03-07), page 43004, XP020300497, ISSN: 1402-4896, DOI: 10.1088/0031-8949/91/4/043004 [retrieved on 2016-03-07] * Measuement Procedures * ----- | 11,12 | |
| A | EROSTYAK J ET AL: "Comparative study of integrating cavity absorption meters", JOURNAL OF BIOCHEMICAL AND BIOPHYSICAL METHODS, AMSTERDAM, NL, vol. 69, no. 1-2, 30 November 2006 (2006-11-30), pages 189-196, XP024996809, ISSN: 0165-022X, DOI: 10.1016/J.JBBM.2006.03.010 [retrieved on 2006-11-30] * the whole document * ----- | 1-12 | |
| A | JOHN D. MASON ET AL: "Robust commercial diffuse reflector for UV-VIS-NIR applications", APPLIED OPTICS, vol. 54, no. 25, 25 August 2015 (2015-08-25), page 7542, XP055273539, US ISSN: 0003-6935, DOI: 10.1364/AO.54.007542 * the whole document * ----- -/-- | 1-12 | |

TECHNICAL FIELDS
SEARCHED      (IPC)

The present search report has been drawn up for all claims

| Place of search | Date of completion of the search | Examiner |
|---|---|---|
| Munich | 17 April 2026 | Meacher, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                     

& : member of the same patent family, corresponding
    document

EPO FORM 1503 03.82 (P04C01)

**page 3 of 4**

| Europäisches Patentamt European Patent Office Office européen des brevets | **EUROPEAN SEARCH REPORT** | **Application Number** EP 26 15 3278 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MASIYANO D. ET AL: "Gas cells for tunable diode laser absorption spectroscopy employing optical diffusers. Part 2: Integrating spheres", APPLIED PHYSICS B , vol. 100, no. 2 25 April 2010 (2010-04-25), pages 303-312, XP093293692, Berlin/Heidelberg ISSN: 0946-2171, DOI: 10.1007/s00340-010-4021-y Retrieved from the Internet: URL:http://link.springer.com/article/10.10 07/s00340-010-4021-y/fulltext.html * the whole document * ----- | 1-12 | |
| | | | **TECHNICAL FIELDS SEARCHED (IPC)** |

The present search report has been drawn up for all claims

| Place of search | Date of completion of the search | Examiner |
|---|---|---|
| Munich | 17 April 2026 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 4 of 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2021405076 A1